# EUROPEAN PATENT APPLICATION

(11) **EP 4 561 087 A1**
(43) Date of publication of application: **28.05.2025**
(21) Application number: 23855044.6
(22) Date of filing: 11.07.2023
(51) Int. Cl.: H04N 23/63, H04N 23/611, H04N 21/431, H04N 13/332

(54) **ELECTRONIC DEVICE FOR APPLYING EFFECT TO IMAGE AND CONTROL METHOD THEREOF**

(30) Priority: 18.08.2022 KR 20220103563
(71) Applicant: Samsung Electronics Co., Ltd., Suwon-si, Gyeonggi-do 16677 (KR)
(72) Inventor: KANG, Donggoo, Suwon-si, Gyeonggi-do 16677 (KR); KANG, Donghee, Suwon-si, Gyeonggi-do 16677 (KR)
(74) Representative: Arnold & Siedsma
(86) International application number: PCT/KR2023/009863
(87) International publication number: WO 2024/039073

(57) **Abstract**

According to an embodiment, an electronic device comprises communication circuitry, a memory, a camera, a display, and at least one processor. The memory may store one or more instructions that, when executed by the at least one processor, cause the electronic device to: establish a communication connection with a first external electronic device via the communication circuitry; use the camera to acquire a first preview image; acquire a first image corresponding to the face of a first subject included in the first preview image; acquire user information, including a face image registered or stored in the first external electronic device, from the first external electronic device through the communication connection; compare the first image and the face image and display, on the first subject included in the first preview image, the user information of the first external electronic device; receive information indicating an effect, for the first subject, determined by the first external electronic device, the information being received from the first external electronic device through the communication connection; and display, on the display, a second preview image in which the effect is applied to the first subject. Various other embodiments are possible.

## Description

### [Technical Field]

Various embodiments of the disclosure relate to an electronic device for applying an effect to an image and a method for controlling the same.

### [Background Art]

Recently, electronic devices including camera modules have become widespread. A user may easily capture an image containing a subject using an electronic device at his desired time. Thus, the user may capture images using the camera module disposed on the front or rear part of the electronic device.

The electronic device also provides a function of editing the image captured using the camera module. For example, the electronic device provides an emoji function capable of applying an emoji effect to the subject contained in the captured image.

### [Detailed Description of the Invention]

### [Technical Solution]

An electronic device according to an embodiment may comprise communication circuitry, memory, a camera, a display, and at least one processor.

The memory according to an embodiment may store at least one instruction that, when executed by the at least one processor, causes the electronic device to establish a communication connection with a first external electronic device through the communication circuitry.

The memory according to an embodiment may store at least one instruction that, when executed by the at least one processor, causes the electronic device to obtain a first preview image using the camera.

The memory according to an embodiment may store at least one instruction that, when executed by the at least one processor, causes the electronic device to obtain a first image corresponding to a face of a first subject included in the first preview image.

The memory according to an embodiment may store at least one instruction that, when executed by the at least one processor, causes the electronic device to obtain user information including a face image registered or stored in the first external electronic device from the first external electronic device through the communication connection.

The memory according to an embodiment may store at least one instruction that, when executed by the at least one processor, causes the electronic device to compare the first image with the face image and display the user information of the first external electronic device on the first subject included in the first preview image.

The memory according to an embodiment may store at least one instruction that, when executed by the at least one processor, causes the electronic device to receive information indicating an effect for the first subject determined by the first external electronic device from the first external electronic device through the communication connection.

The memory according to an embodiment may store at least one instruction that, when executed by the at least one processor, causes the electronic device to display a second preview image in which the effect is applied to the first subject on the display.

A method for operating an electronic device according to an embodiment may comprise forming a communication connection with a first external electronic device through communication circuitry included in the electronic device.

The method for operating an electronic device according to an embodiment may comprise obtaining a first preview image using a camera included in the electronic device.

The method for operating the electronic device according to an embodiment may comprise obtaining a first image corresponding to a face of a first subject included in the first preview image.

The method for operating the electronic device according to an embodiment may comprise obtaining user information including a face image registered or stored in the first external electronic device from the first external electronic device through the communication connection.

The method for operating the electronic device according to an embodiment may comprise comparing the first image with the face image and displaying the user information of the first external electronic device on the first subject included in the first preview image.

The method for operating the electronic device according to an embodiment may comprise receiving information indicating an effect for the first subject determined by the first external electronic device from the first external electronic device through the communication connection.

The method for operating the electronic device according to an embodiment may comprise displaying a second preview image in which the effect is applied to the first subject on a display included in the electronic device.

A non-transitory recording medium of an electronic device according to an embodiment may execute forming a communication connection with a first external electronic device through communication circuitry included in an electronic device.

The non-transitory recording medium of the electronic device according to an embodiment may execute obtaining a first preview image using a camera included in the electronic device.

The non-transitory recording medium of the electronic device according to an embodiment may execute obtaining a first image corresponding to a face of a first subject included in the first preview image.

The non-transitory recording medium of the electronic device according to an embodiment may execute obtaining user information including a face image registered or stored in the first external electronic device from the first external electronic device through the communication connection.

The non-transitory recording medium of the electronic device according to an embodiment may execute comparing the first image with the face image and displaying the user information of the first external electronic device on the first subject included in the first preview image.

The non-transitory recording medium of the electronic device according to an embodiment may execute receiving information indicating an effect for the first subject determined by the first external electronic device from the first external electronic device through the communication connection.

The non-transitory recording medium of the electronic device according to an embodiment may execute displaying a second preview image in which the effect is applied to the first subject on a display included in the electronic device.

### [Brief Description of the Drawings]

FIG. 1 is a view illustrating a glass-type wearable device according to an embodiment;
FIG. 2 is a view illustrating a structure of a glass-type wearable device according to an embodiment;
FIG. 3A is a view illustrating an electronic device and external electronic devices according to an embodiment;
FIG. 3B is a block diagram schematically illustrating a configuration of an electronic device according to an embodiment;
FIG. 4 is a view illustrating an operation of applying an effect to a subject included in an image captured by an electronic device according to an embodiment;
FIGS. 5A, 5B, and 5C are views illustrating a communication connection process of an electronic device and an external electronic device according to an embodiment;
FIGS. 6A and 6B are views illustrating a process in which an electronic device transmits a preview image to an external electronic device according to an embodiment;
FIG. 7 is a view illustrating a process in which an electronic device displays user information about external electronic devices on a subject included in a preview image according to an embodiment;
FIG. 8A is a view illustrating a preview image transmitted to external electronic devices by an electronic device when an image corresponding to a face of each of subjects included in the preview image does not match a face image received from an external electronic device according to an embodiment;
FIG. 8B is a view illustrating a process in which an external electronic device inputs identification information onto a subject when an image corresponding to a face of a subject included in a preview image does not match a face image received from an external electronic device according to an embodiment;
FIGS. 9A and 9B are views illustrating a process of applying an effect to a subject according to an embodiment;
FIGS. 10A, 10B, and 10C are views illustrating an example in which an electronic device is used for educational purposes according to an embodiment;
FIGS. 11A and 11B are views illustrating an operation of applying an effect to a subject included in an image captured by an electronic device according to an embodiment; and
FIG. 12 is a block diagram illustrating an electronic device in a network environment according to an embodiment.

### [Mode for Carrying out the Invention]

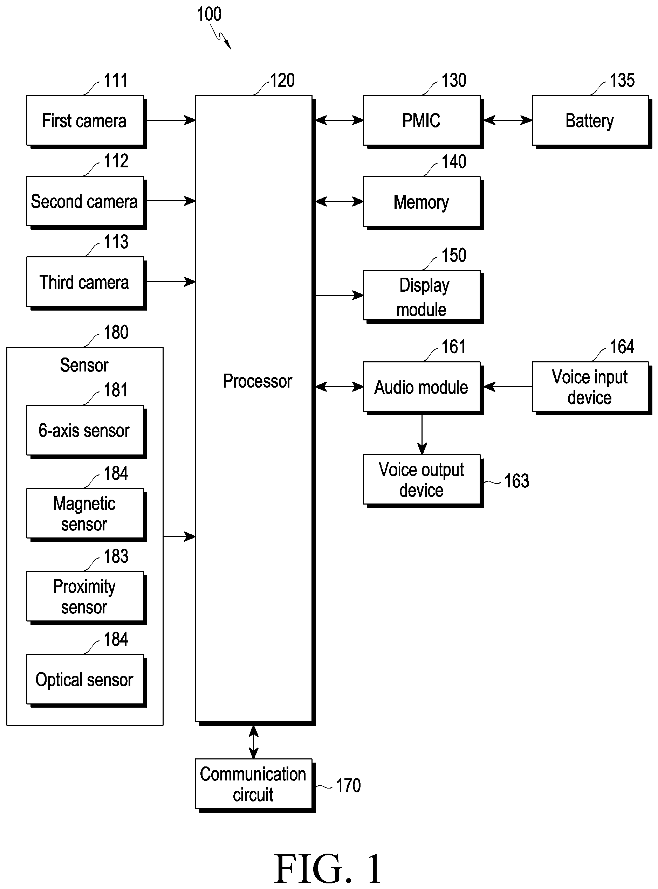

FIG. 1 is an example view illustrating a glass-type wearable device according to an embodiment of the disclosure; Although the glass-type wearable device 100 is described herein as an example, the disclosure is not limited thereto. For example, various embodiments of the disclosure may be applied to at least one of an accessory-type device (e.g., a watch, a ring, a bracelet, an anklet, a necklace, glasses, contact lenses, or a head-mounted device (HMD) or head-mounted display (HMD)), a fabric- or clothes-integrated device (e.g., electronic clothes), a body attaching-type device (e.g., a skin pad or tattoo), or a body implantable device. According to an embodiment of the disclosure, the glass-type wearable device 100 may include at least one of a first camera 111, a second camera 112, a third camera 113, a processor 120, a PMIC 130, a battery 135, a memory 140, a display module 150, an audio module 161, a voice input device 162, a voice output device 163, communication circuitry 170, and a sensor 180.

According to an embodiment, an image obtained through the first camera 111 may be used for detection of the user's hand gesture, tracking the user's head, and/or spatial recognition. According to an embodiment of the disclosure, the first camera 111 may include a global shutter (GS) camera. According to an embodiment, the first camera 111 may perform a simultaneous localization and mapping (SLAM) operation through depth capture. According to an embodiment, the first camera 111 may perform spatial recognition for 6DoF. According to an embodiment, the first camera 111 may be configured to capture the real world corresponding to the first user's gaze when worn by the first user.

According to an embodiment, the image obtained through the second camera 112 may be used to detect and track the user's eye. According to an embodiment of the disclosure, the second camera 112 may include a GS camera. According to an embodiment of the disclosure, second cameras 112 may correspond to the left and right eye, respectively, and may have the same or similar performances.

According to an embodiment, the third camera 113 may include a camera with a higher resolution than the first camera 111 and the second camera 112. According to an embodiment, the third camera 113 may perform auto-focusing (AF) and anti-shake functions. According to an embodiment, the third camera 113 may include a GS camera or a rolling shutter (RS) camera. According to an embodiment, the first camera 111 may be configured to capture the real world corresponding to the first user's gaze when worn by the first user.

According to an embodiment, the processor 120 may control the other components of the glass-type wearable device 100, e.g., the first camera 111, the second camera 112, the third camera 113, the PMIC 130, the memory 140, the display module 150, the audio module 161, the communication circuitry 170, and the sensor 180 and may perform various data processing or computations. According to an embodiment, the processor 120 may execute, for example, software (e.g., a program) to control at least one other component (e.g., a hardware or software component) of the glass-type wearable device 100 coupled with the processor 120, and may perform various data processing or computation. According to one embodiment, as at least part of the data processing or computation, the processor 120 may store a command or data received from another component (e.g., the sensor module 176 or communication module 170 or a sensor module 190) onto a volatile memory, process the command or the data stored in the volatile memory, and store resulting data in a non-volatile memory. According to an embodiment, the processor 120 may include a main processor (e.g., a central processing unit (CPU) or an application processor (AP)), or an auxiliary processor (e.g., a graphics processing unit (GPU), a neural processing unit (NPU), an image signal processor (ISP), a sensor hub processor, or a communication processor (CP)) that is operable independently from, or in conjunction with, the main processor 121. For example, when the glass-type wearable device 100 or 310 includes the main processor and the auxiliary processor, the auxiliary processor may be configured to use lower power than the main processor or to be specified for a designated function. The auxiliary processor may be implemented separately from or as part of the main processor.

According to an embodiment, the PMIC 130 may convert the power stored in the battery 135 to have the current or voltage required by the other components of the glass-type wearable device 100 and supply it to the other components of the glass-type wearable device 100.

According to an embodiment, the memory 140 may store various data used by at least one component (e.g., the processor 120 or the sensor module 180) of the glass-type wearable device 100. According to an embodiment, the memory 140 may include a volatile or non-volatile memory.

According to an embodiment, the display module 150 may display a screen to be provided to the user. According to an embodiment, the display module 150 may output data (e.g., RGB data) for representing a virtual object (e.g., augmented reality guide). According to an embodiment, the display module 150 may include a first display 251, a second display 252, one or more input optical members 253-1 and 253-2, one or more transparent members 290-1 and 290-2, and one or more screen display portions 254-1 and 254-2.

According to an embodiment, the audio module 161 may be connected to the voice input device 162 and the voice output device 163 and may convert the data input through the voice input device 162 and may convert data to be output to the audio output device 163. According to an embodiment, the voice input device 162 may include at least one microphone, and that the voice output device 163 may include at least one speaker and an amplifier. According to an embodiment, the communication circuitry 170 may support establishment of a wireless communication channel with an external electronic device connected with the glass-type wearable device 100 and performing communication through the established communication channel. According to an embodiment, the sensor 180 may include a 6-axis sensor 181, a magnetic sensor 182, a proximity sensor 183, and/or an optical sensor 184.

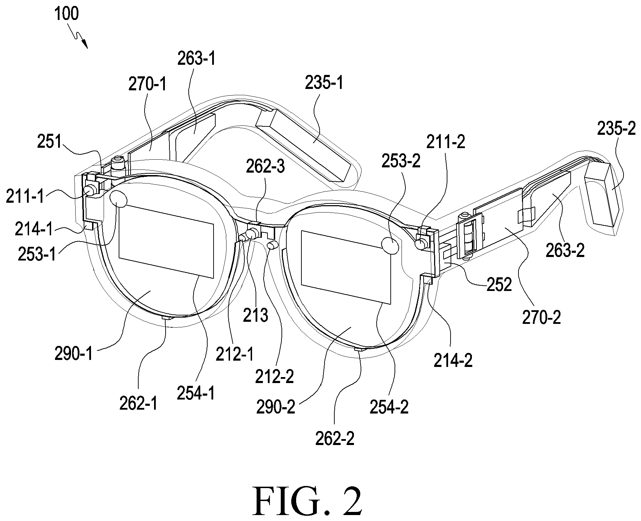

FIG. 2 is an example view illustrating a structure of a glass-type wearable device according to an embodiment.

Referring to FIG. 2, the glass-type wearable device 100 may include one or more light emitting devices 214-1 and 214-2. According to an embodiment, the light emitting elements 214-1 and 214-2 may be different from a light source, which is described below, for irradiating light to a screen output area of the display. According to an embodiment, the light emitting devices 214-1 and 214-2 may irradiate light to facilitate pupil detection in detecting and tracking the user's pupils through the one or more second cameras 212-1 and 212-2. According to an embodiment, each of the light emitting devices 214-1 and 214-2 may include an LED. According to an embodiment, the light emitting devices 214-1 and 214-2 may irradiate light in an infrared band. According to an embodiment of the disclosure, the light emitting devices 214-1 and 214-2 may be attached around the frame of the glass-type wearable device 100. According to an embodiment, the light emitting devices 214-1 and 214-2 may be positioned around the first cameras 211-1 and 211-2 and, when the glass-type wearable device 100 is used in a dark environment, assist gesture detection, head tracking, and space recognition by one or more first cameras 211-1 and 211-2. According to an embodiment, the light emitting devices 214-1 and 214-2 may be positioned around the one or more third cameras 213 and may assist obtaining images by the one or more third cameras 213 when the glass-type wearable device 100 is used in a dark environment.

According to an embodiment, the glass-type wearable device 100 may include batteries 235-1 and 235-2. The batteries 235-1 and 235-2 may store power for operating the remaining components of the glass-type wearable device 100.

According to an embodiment, the glass-type wearable device 100 may include a first display 251, a second display 252, one or more input optical members 253-1 and 253-2, one or more transparent members 290-1 and 290-2, and one or more screen display portions 254-1 and 254-2. According to an embodiment, the first display 251 and the second display 252 may include, e.g., a liquid crystal display (LCD), a digital mirror device (DMD), a liquid crystal on silicon (LCoS), or an organic light emitting diode (OLED), or a micro light emitting diode (micro LED). According to an embodiment, when the first display 251 and the second display 252 are formed of one of a liquid crystal display device, a digital mirror display device, or a silicon liquid crystal display device, the glass-type wearable device 100 may include a light source for irradiating light to a screen output area of the display. According to an embodiment, when the first display 251 and the second display 252 may generate light on their own, e.g., when formed of either organic light emitting diodes or micro LEDs, the glass-type wearable device 100 may provide a virtual image of relatively good quality to the user even when a separate light source is not included.

According to an embodiment, the one or more transparent members 290-1 and 290-2 may be disposed to face the user's eyes when the user wears the glass-type wearable device 100 or 310. According to an embodiment, the one or more transparent members 290-1 and 290-2 may include at least one of a glass plate, a plastic plate, and a polymer. According to an embodiment, the user may view the outside world through the one or more transparent members 290-1 and 290-2 when the user wears the glass-type wearable device 100. According to an embodiment, the one or more input optical members 253-1 and 253-2 may guide the light generated by the first display 251 and the second display 252 to the user's eyes. According to an embodiment, images based on the light generated by the first display 251 and the second display 252 may be formed on one or more screen display portions 254-1 and 254-2 on the one or more transparent members 290-1 and 290-2, and the user may view the images formed on the one or more screen display portions 254-1 and 254-2.

According to an embodiment, the glass-type wearable device 100 may include one or more optical waveguides (not shown). According to an embodiment, the optical waveguides may transfer the light generated by the first display 251 and the second display 252 to the user's eyes. The glass-type wearable device 100 may include one optical waveguide corresponding to each of the left eye and the right eye. According to an embodiment, the optical waveguide may include at least one of glass, plastic, or polymer. According to an embodiment of the disclosure, the optical waveguide may include a nano-pattern formed inside or on one outer surface, e.g., a polygonal or curved grating structure. According to an embodiment, the optical waveguide may include a free-form type prism, and in this case, the optical waveguide may provide incident light to the user through a reflective mirror. According to an embodiment of the disclosure, the optical waveguide may include at least one of at least one diffractive element (e.g., a diffractive optical element (DOE) or a holographic optical element (HOE)) or a reflective element (e.g., a reflective mirror) and guide the display light emitted from the light source to the user's eyes using at least one diffractive element or reflective element included in the optical waveguide. According to an embodiment, the diffractive element may include input/output optical elements. According to an embodiment, the reflective element may include a member causing total reflection.

According to an embodiment, the glass-type wearable device 100 may include one or more voice input devices 262-1, 262-2, and 262-3 and one or more voice output devices 263-1 and 263-2.

According to an embodiment, the glass-type wearable device 100 may include a first PCB 270-1 and a second PCB 270-2. The first PCB 270-1 and the second PCB 270-2 may be configured to transfer electrical signals to components included in the glass-type wearable device 100, such as a first camera 111, a second camera 112, a third camera 113, a display module 150, an audio module 161, and a sensor 180. According to an embodiment, the first PCB 270-1 and the second PCB 270-2 may include a flexible printed circuit board (FPCB). According to an embodiment, the first PCB 270-1 and the second PCB 270-2 each may include a first substrate, a second substrate, and an interposer disposed between the first substrate and the second substrate.

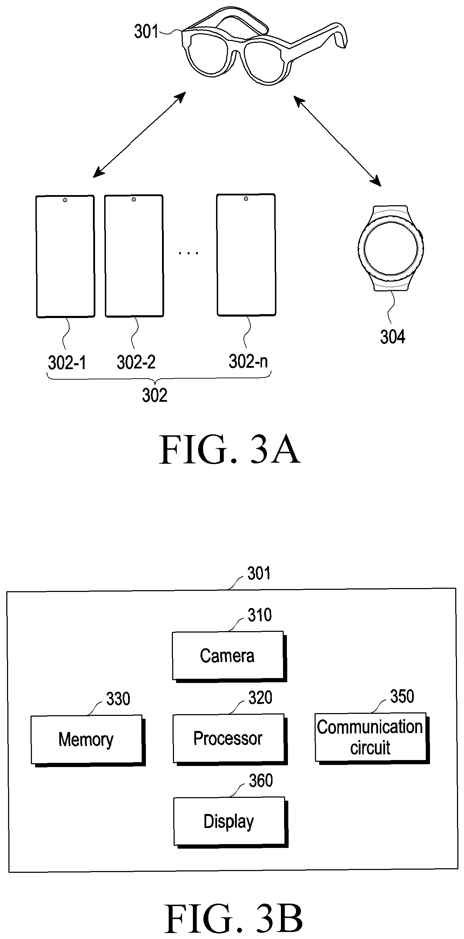

FIG. 3A is a view illustrating an electronic device and external electronic devices according to an embodiment.

Referring to FIG. 3A, according to an embodiment, the electronic device 301 may form a communication connection with each of the external electronic devices 302, 302-1 to 302-n (where n is a natural number larger than or equal to 3). For example, the electronic device 301 may establish a communication connection with each of the external electronic devices 302 through Wi-Fi direct. For example, the communication connection may be a connection for the electronic device 301 to perform peer-to-peer (P2P) communication with each of the external electronic devices 302. For example, the electronic device 301 may establish a first communication connection with a first external electronic device 302-1 among the external electronic devices 302 through Wi-Fi direct.

According to an embodiment, the electronic device 301 may establish a communication connection with a second external electronic device 304. The electronic device 301 may establish a second communication connection with the second external electronic device 304 through a short-range communication technology (e.g., Bluetooth or Wi-Fi). However, this is merely an example, and embodiments of the present invention may not be limited thereto. For example, the electronic device 301 may establish a communication connection with the external electronic devices 302 and the second external electronic device 304 through various short-range communication technologies. FIG. 3B is a block diagram schematically illustrating a configuration of an electronic device according to an embodiment.

Referring to FIG. 3B, according to an embodiment, the electronic device 301 may include a camera 310, a processor 320, memory 330, communication circuitry 350, and a display 360. According to an embodiment, the electronic device 301 may be implemented as augmented reality (AR) glasses. However, the electronic device 301 may be implemented as various types of electronic devices (e.g., smartphones) capable of performing communication functions as well as AR glasses. According to an embodiment, the electronic device 301 may be implemented to be identical or similar to the electronic device 100 of FIGS. 1 and 2.

According to an embodiment, the processor 320 may control the overall operation of the electronic device 301. For example, the processor 320 may be implemented to be identical or similar to the processor 120 of FIG. 1.

According to an embodiment, the processor 320 may establish a communication connection with the external electronic devices 302 and 304 through the communication circuitry 350. For example, the processor 320 may establish a first communication connection with the first external electronic device 302-1 among the external electronic devices 302 using Wi-Fi direct. Further, the processor 320 may establish a second communication connection with the second external electronic device 304 through the communication circuitry 350. Further, the processor 320 may establish a second communication connection with the second external electronic device 304 using a short-range communication technology (e.g., Bluetooth communication). For example, the communication circuitry 350 may support short-range communication technology (e.g., Wi-Fi and Bluetooth communication technology). For example, the communication circuitry 350 may be implemented to be identical or similar to the communication circuitry 170 of FIG. 1.

According to an embodiment, the processor 320 may obtain a first preview image using the camera 310 (e.g., 111, 112, or 113 of FIG. 1). The first preview image may include at least one subject. The first preview image may mean an image captured in real-time using the camera 310. According to an embodiment, the electronic device 301 may obtain a still image instead of the preview image using the camera. Alternatively, the electronic device 301 may obtain a pre-captured still image stored in the memory 330 (e.g., the memory 140 of FIG. 1). Hereinafter, for convenience of description, an operation in which the electronic device 301 uses a preview image will be mainly described. However, the technical spirit of the present invention may not be limited thereto.

According to an embodiment, the processor 320 may obtain a first image corresponding to the face of a first subject (e.g., a person) among at least one subject included in the first preview image. For example, the first image may be an image including the face of the first subject in the first preview image. For example, the size of the first image may be smaller than the size of the first preview image.

According to an embodiment, the processor 320 may obtain user information registered or stored in the first external electronic device 302-1 from the first external electronic device 302-1 among the external electronic devices 302 through the first communication connection. For example, the user information may include a face image registered or stored in the first external electronic device 302-1. Further, the user information may include information related to a name, a birthday, and a nickname registered or stored in the first external electronic device 302-1.

According to an embodiment, the processor 320 may compare the first image with the face image included in the user information. When it is identified that the first image matches the face image, the processor 320 may display user information (e.g., a name or a nickname) of the first external electronic device 302-1 on the first preview image. For example, the processor 320 may display user information (e.g., a name or a nickname) of the first external electronic device 302-1 on the first subject of the first preview image.

According to an embodiment, the processor 320 may receive information indicating an effect on the first subject from the first external electronic device 302-1 through the first communication connection. For example, the effect on the first subject may be determined by the first external electronic device 302-1.

According to an embodiment, the processor 320 may display the second preview image in which the effect is applied to the first subject on the display 360, based on the information indicating the effect on the first subject.

According to an embodiment, when the electronic device 301 is implemented as a smartphone, the processor 320 may obtain a preview image including the user of the electronic device 301 as a subject using the camera 310 positioned on the front surface of the electronic device 301. The processor 320 may display user information (e.g., a name or a nickname) on the subject corresponding to the user of the electronic device 301 included in the preview image, based on a user input made by the user of the electronic device 301. Further, the processor 320 may apply a specific effect to the subject corresponding to the user of the electronic device 301 included in the preview image, based on a user input made by the user of the electronic device 301. The processor 320 may display, on the display 360, a second preview image in which a specific effect is applied to the subject corresponding to the user. In this case, the user input may be an input to the electronic device 301 (or a touch screen (e.g., the display 360) of the electronic device 301). Alternatively, the user input may be an input to the second external electronic device 304 through the second communication connection.

According to an embodiment, at least one subject (e.g., a person) included in the first preview image may be the user of at least one external electronic device among the external electronic devices 302. According to an embodiment, the user corresponding to at least one subject included in the first preview image may determine an effect to be applied to his/her face or body included in the first preview image using the external electronic devices 302. According to an embodiment, each of the external electronic devices 302 may include a smartphone and/or various types of wearable electronic devices.

At least some of the operations of the electronic device 301 described below may be performed by the processor 320. However, for convenience of description, the subject of the operation is described as the electronic device 301.

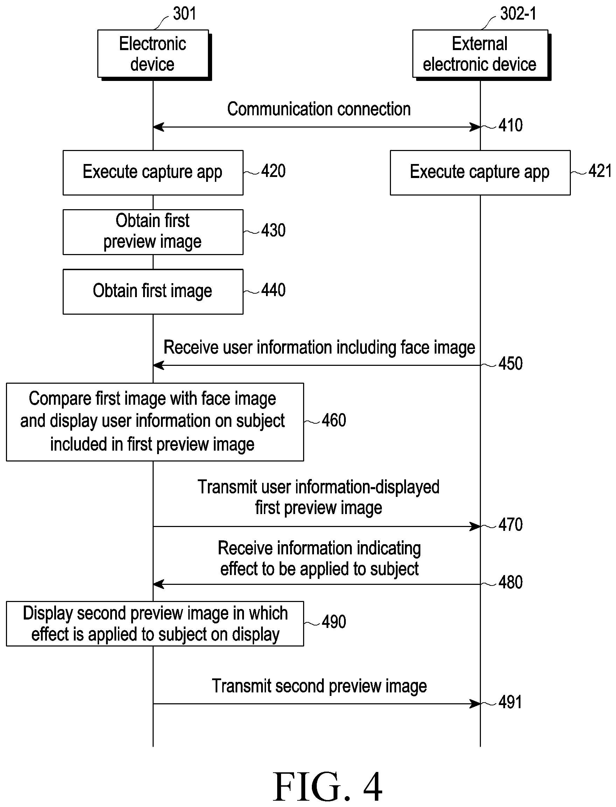

FIG. 4 is a view illustrating an operation of applying an effect to a subject included in an image captured by an electronic device according to an embodiment.

Referring to FIG. 4, according to an embodiment, in operation 410, the electronic device 301 may establish a communication connection with a first external electronic device 302-1 through Wi-Fi direct.

According to an embodiment, the electronic device 301 may execute an application related to the camera 310 in operation 420.

According to an embodiment, the first external electronic device 302-1 may execute an application related to the camera 310 in operation 421. The application related to the camera 310 executed by the first external electronic device 302-1 may be the same as the application related to the camera 310 executed by the electronic device 301.

According to an embodiment, the electronic device 301 may obtain a first preview image captured using the camera 310 in operation 430. The electronic device 301 may transmit the first preview image to the first external electronic device 302-1 in real-time or every preset period through the first communication connection.

According to an embodiment, the electronic device 301 may obtain a first image in operation 440. The first image may include an image corresponding to the face of a specific subject included in the first preview image. For example, the electronic device 301 may obtain the first image from the first preview image using a face recognition function.

According to an embodiment, in operation 450, the electronic device 301 may receive user information including a face image from the first external electronic device 302-1 through the first communication connection. For example, the electronic device 301 may request the first external electronic device 302-1 to transmit the user information to obtain the user information. For example, the user information may include a face image registered or stored in the first external electronic device 302-1. Further, the user information may include identification information registered or stored in the first external electronic device 302-1. The identification information may include a name (or nickname) previously stored (or registered) by the user of the first external electronic device 302-1 or a model name of the first external electronic device 302-1. Alternatively, the identification information may include identification information (e.g., name or nickname) directly input by the user of the first external electronic device 302-1 when the electronic device 301 requests user information or identification information from the first external electronic device 302-1.

According to an embodiment, in operation 460, the electronic device 301 may compare the first image with the face image included in the user information and may display the user information on a specific subject included in the first preview image. For example, when the first image matches the face image included in the user information, the electronic device 301 may display user information (e.g., identification information) of the first external electronic device 302-1 on the specific subject included in the first preview image.

According to an embodiment, the electronic device 301 may transmit the first preview image in which the identification information is displayed to the first external electronic device 302-1 in operation 470. For example, the electronic device 301 may transmit the first preview image in which the identification information is displayed in real-time or periodically.

According to an embodiment, in operation 480, the electronic device 301 may receive information about the effect to be applied to the specific subject from the first external electronic device 302-1 through the first communication connection. For example, the electronic device 301 may request an effect (e.g., emoji effect) to be applied to the specific subject from the first external electronic device 302-1 determined to have been identified among the external electronic devices 302. In this case, the first external electronic device 302-1 may transmit information about the effect to be applied to the specific subject to the electronic device 301 in response to the request. The electronic device 301 may receive information about the effect (e.g., an emoji effect) to be applied to the specific subject from the first external electronic device 302-1. Alternatively, the electronic device 301 may not request the effect to be applied to the specific subject from the first external electronic device 302-1. For example, the electronic device 301 may receive information about the effect to be applied to the specific subject from the first external electronic device 302-1 without a separate request.

According to an embodiment, in operation 490, the electronic device 301 may display, on the display 360, the second preview image in which the corresponding effect (e.g., emoji effect) is applied to the specific subject, based on the information about the effect to be applied to the specific subject. For example, the effect applied to the specific subject may include the effect of applying an emoji related to a hairstyle, a costume, an accessory (e.g., glasses, a hat, shoes, earrings), and/or a specific character to the specific subject. Further, the effect applied to the specific subject may include skin brightness correction, face correction, hair color change, and/or eye color change of the subject.

According to an embodiment, the electronic device 301 may store the second preview image in the memory 330. According to an embodiment, the electronic device 301 may transmit the second preview image to the first external electronic device 302-1 in operation 491.

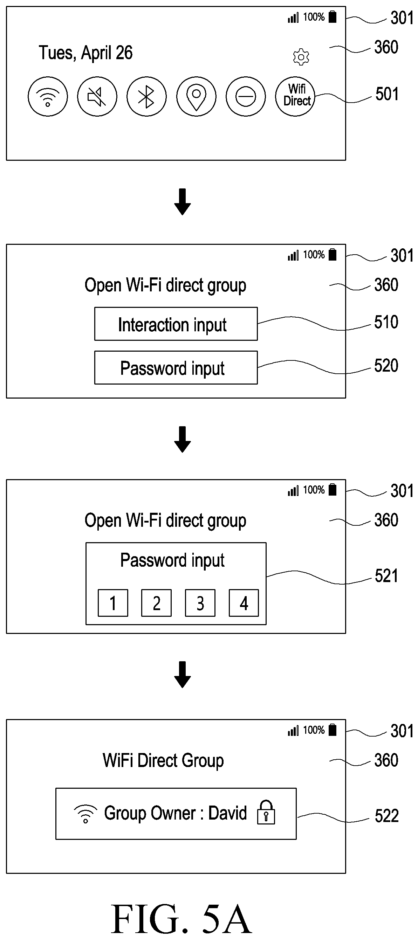

FIG. 5A is a view illustrating a communication connection process of an electronic device and an external electronic device according to an embodiment.

Referring to FIG. 5A, according to an embodiment, the electronic device 301 may perform Wi-Fi direct connection with the first external electronic device 302-1 using a preset motion (e.g., motion interaction) or password input.

According to an embodiment, the electronic device 301 may display an object 501 related to a Wi-Fi direct connection on the display 360.

According to an embodiment, the electronic device 301 may display, on the display 360, a first connection object 510 capable of connecting Wi-Fi direct through a preset motion (e.g., motion interaction) and/or a second connection object 520 capable of connecting Wi-Fi direct through a password input, based on a user input to the object 501 related to Wi-Fi direct connection.

According to an embodiment, the electronic device 301 may identify the motion of the user, based on the user input to the first connection object 510. Alternatively, the electronic device 301 may identify the motion of the user identified by the second external electronic device 304 through the second communication connection.

According to an embodiment, the electronic device 301. may receive a password from the user based on a user input to the second connection object 520. The electronic device 301 may display the password input from the user on a password screen 521.

According to an embodiment, when it is identified that the motion of the user matches the preset motion and/or the password input by the user matches the preset password, the electronic device 301 may establish a communication connection using Wi-Fi direct. In other words, the electronic device 301 may establish a first communication connection with the first external electronic device 302-1. For example, the electronic device 301 may be set as a group owner of Wi-Fi direct. Further, the first external electronic device 302-1 may be set as a group client of Wi-Fi direct.

According to an embodiment, the electronic device 301 may display connection information 522 indicating that a Wi-Fi direct connection gate is formed on the display 360. For example, the connection information 522 may include user information or identification information (e.g., David) stored in the electronic device 301. Further, the connection information 522 may include information indicating that the electronic device 301 is set as a group owner. However, this is merely an example, and embodiments of the present invention may not be limited thereto.

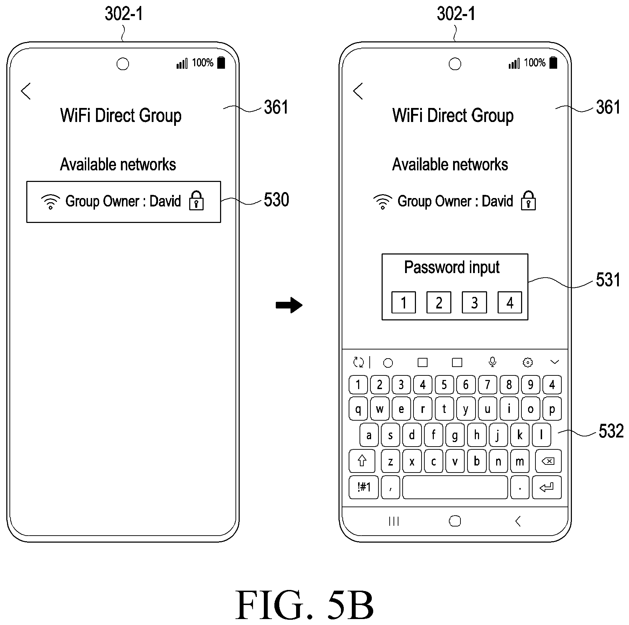

FIG. 5B is a view illustrating a communication connection process of an electronic device and an external electronic device according to an embodiment.

Referring to FIG. 5B, according to an embodiment, the first external electronic device 302-1 may display connection information 530 related to Wi-Fi direct connection on the display 361 included in the first external electronic device 302-1. For example, the connection information 530 may include identification information (e.g., David) of the electronic device 301 and/or information indicating that the electronic device 301 is set as a group owner.

According to an embodiment, the first external electronic device 302-1 may receive a password based on a user input for selecting the connection information 530. The first external electronic device 302-1 may display the password entered in the password input window 531. When the password preset by the electronic device 301 matches the password input to the first external electronic device 302-1, the first external electronic device 302-1 may establish a first communication connection with the electronic device 301. For example, the first external electronic device 302-1 may be set as a group client.

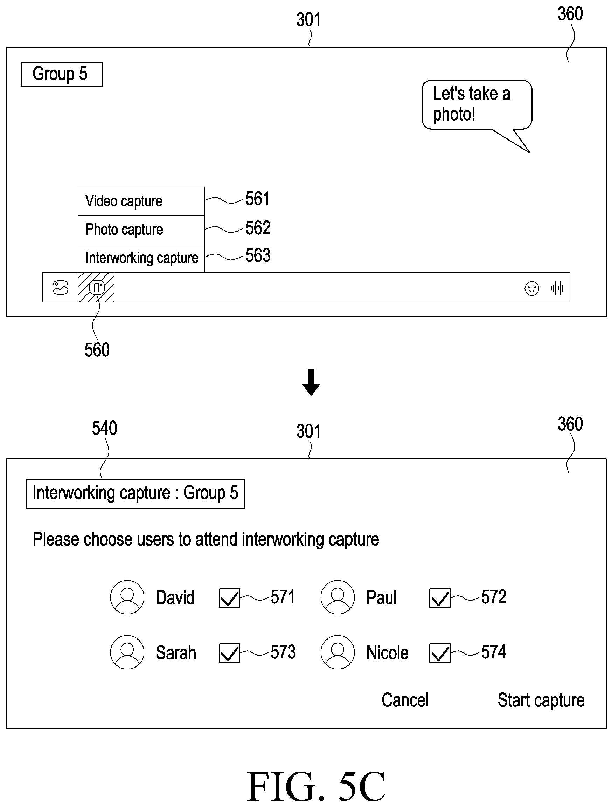

FIG. 5C is a view illustrating a communication connection process of an electronic device and an external electronic device according to an embodiment.

Referring to FIG. 5C, according to an embodiment, the electronic device 301 may establish a communication connection with external electronic devices 302 using a message application. For example, the communication connection may use a P2P communication technology (e.g., Wi-Fi direct) supported by the message application.

According to an embodiment, the electronic device 301 may execute a specific message application. Further, the first external electronic device 302-1 may also execute the specific message application. According to an embodiment, the electronic device 301 may transmit and receive a message to and from the first external electronic device 302-1 through the message application.

According to an embodiment, if the message application is executed, the electronic device 301 may display an object 560 related to capturing on the display 360. The electronic device 301 may display a video capturing object 561, a photo capturing object 562, and an interworking capturing object 563, based on a user input to the object 560. For example, interworking capturing may mean a function in which the electronic device 301 shares a preview image with the external electronic devices 302 and may apply a specific effect (e.g., an emoji effect) to at least one subject included in the shared preview image.

According to an embodiment, if the interworking capturing object 563 is selected according to a user input, the electronic device 301 may display a screen for connecting with the external electronic devices 302. For example, the screen for connecting to the external electronic devices 302 may include a chat room name 540 set for the group chat room. Further, the screen for connecting with the external electronic devices 302 may display objects 571, 572, 573, and 574 for selecting an external electronic device to participate in interworking capturing from among the external electronic devices participating in the group chat room.

According to an embodiment, if external electronic devices to participate in interworking capturing are selected, the electronic device 301 may establish a communication connection (e.g., a P2P communication connection) with each of the external electronic devices 302 without a separate Wi-Fi direct connection process.

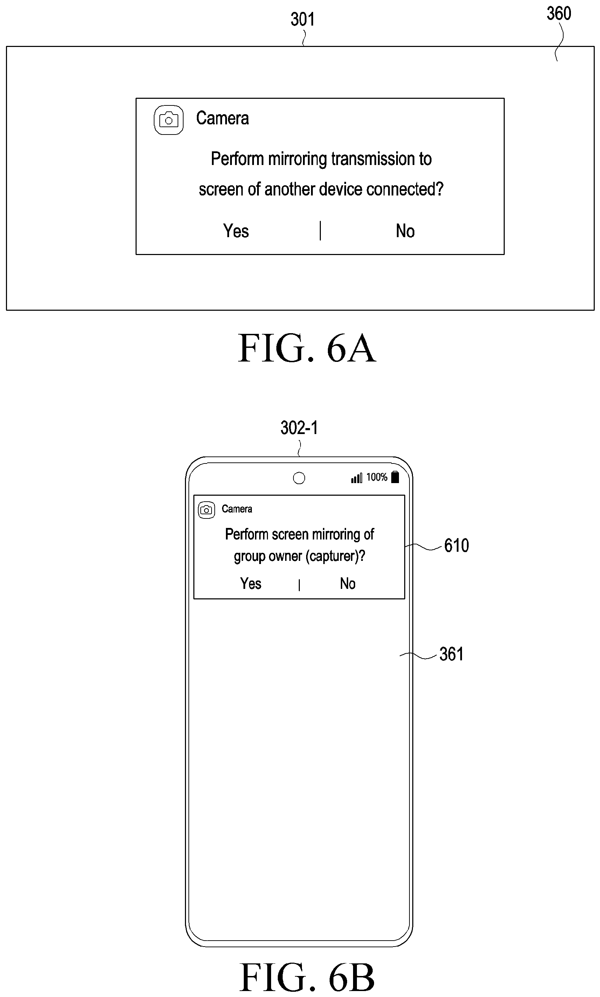

FIGS. 6A and 6B are views illustrating a process in which an electronic device transmits a preview image to an external electronic device according to an embodiment.

Referring to FIG. 6A, according to an embodiment, the electronic device 301 may transmit a first preview image to the external electronic devices 302 through the communication connection. According to an embodiment, the electronic device 301 may display, on the display 360, a pop-up window for identifying whether to transmit (e.g., mirroring transmission) the first preview image to the external electronic devices 302. The electronic device 301 may transmit the first preview image to the external electronic devices 302 based on a user input to the pop-up window.

Referring to FIG. 6B, according to an embodiment, a first external electronic device 302-1 among the external electronic devices 302 may identify reception of a preview image. The first external electronic device 302-1 may display a pop-up window 610 for identifying whether to receive the first preview image on the display 361 of the first external electronic device 302-1. The first external electronic device 302-1 may display the first preview image on the display 361 based on a user input to the pop-up window 610.

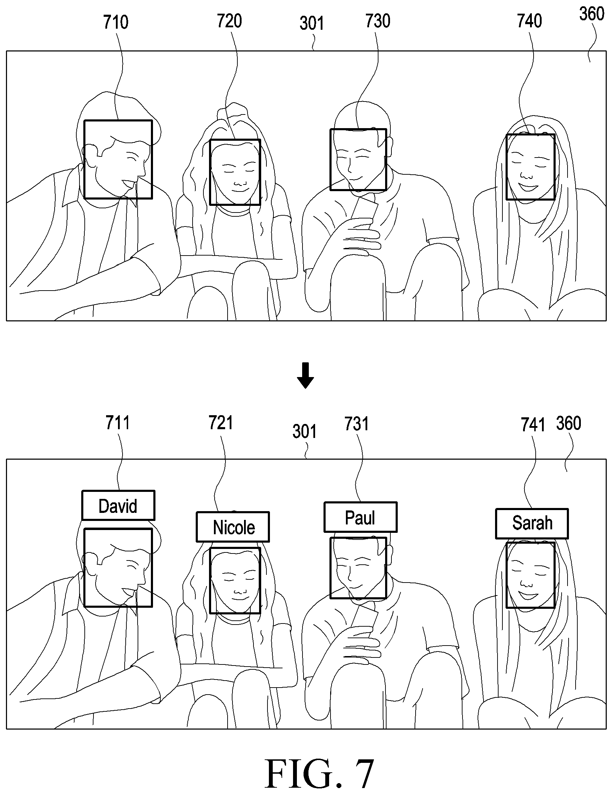

FIG. 7 is a view illustrating a process in which an electronic device displays user information about an external electronic device on a subject included in a preview image according to an embodiment.

Referring to FIG. 7, according to an embodiment, the electronic device 301 may display a first preview image on the display 360. The electronic device 301 may obtain images 710, 720, 730, and 740 corresponding to faces of a plurality of subjects included in the first preview image.

According to an embodiment, the electronic device 301 may compare the face images received from the external electronic devices 302 participating in the communication connection with the images 710, 720, 730, and 740 obtained from the plurality of subjects. For example, the electronic device 301 may compare the first image (e.g., 710) corresponding to the face of the specific subject with the face image received from the first external electronic device 302-1. According to an embodiment, when the face images received from the external electronic devices 302 and the images 710, 720, 730, and 740 obtained from the plurality of subjects match each other, the electronic device 301 may display identification information 711, 721, 731, and 741 on each of the plurality of subjects.

According to an embodiment, the electronic device 301 may transmit the first preview image displaying the identification information 711, 721, 731, and 741 to the external electronic devices 302 participating in the communication connection.

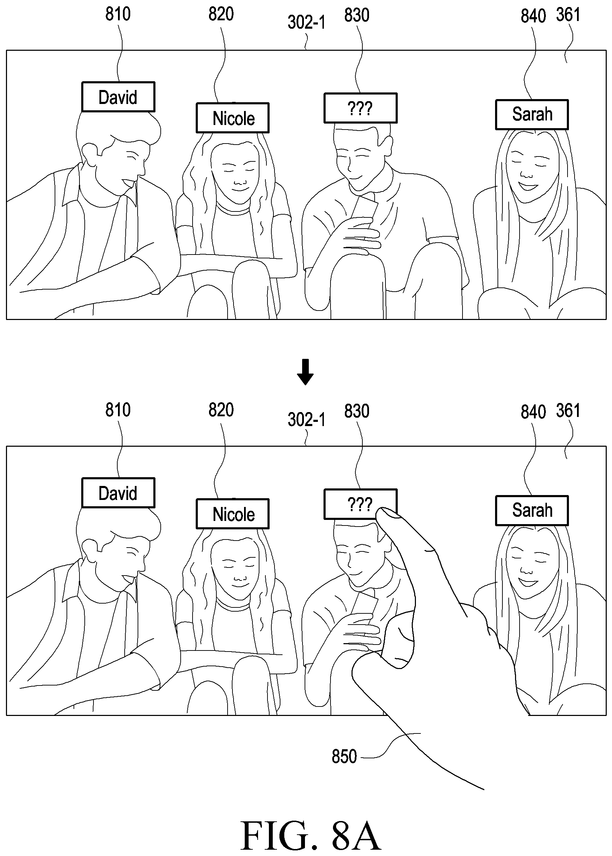

FIG. 8A is a view illustrating a preview image transmitted to an external electronic device by an electronic device when an image corresponding to a face of each of subjects included in the preview image does not match a face image received from an external electronic device according to an embodiment.

Referring to FIGS. 7 and 8A, according to an embodiment, the electronic device 301 may compare the face images received from the external electronic devices 302 participating in the communication connection with the images 710, 720, 730, and 740 obtained from the plurality of subjects. When the face images received from the external electronic devices 302 do not match the specific image 730 among the images 710, 720, 730, and 740 obtained from the plurality of subjects, the electronic device 301 may not display the identification information about the corresponding subject. The electronic device 301 may display identification information 810, 820, and 840 on the remaining subjects other than the corresponding subject among the subjects included in the first preview image.

According to an embodiment, the electronic device 301 may display information 830 indicating the mismatch on the corresponding subject in a pre-stored manner. For example, the electronic device 301 may display special character symbols such as "??? on the corresponding subject. However, this is merely an example, and embodiments of the present invention may not be limited thereto.

According to an embodiment, the electronic device 301 may transmit, to the external electronic devices 302, the first preview image displaying the identification information 810, 820, and 840 on the remaining subjects other than the corresponding subject among the plurality of subjects through the communication connection.

According to an embodiment, the first external electronic device 302-1 may receive the first preview image displaying the identification information 810, 820, and 840 on the remaining subjects other than the corresponding subject among the plurality of subjects through the first communication connection. The first external electronic device 302-1 may display the received first preview image on the display 361 included in the first external electronic device 302-1.

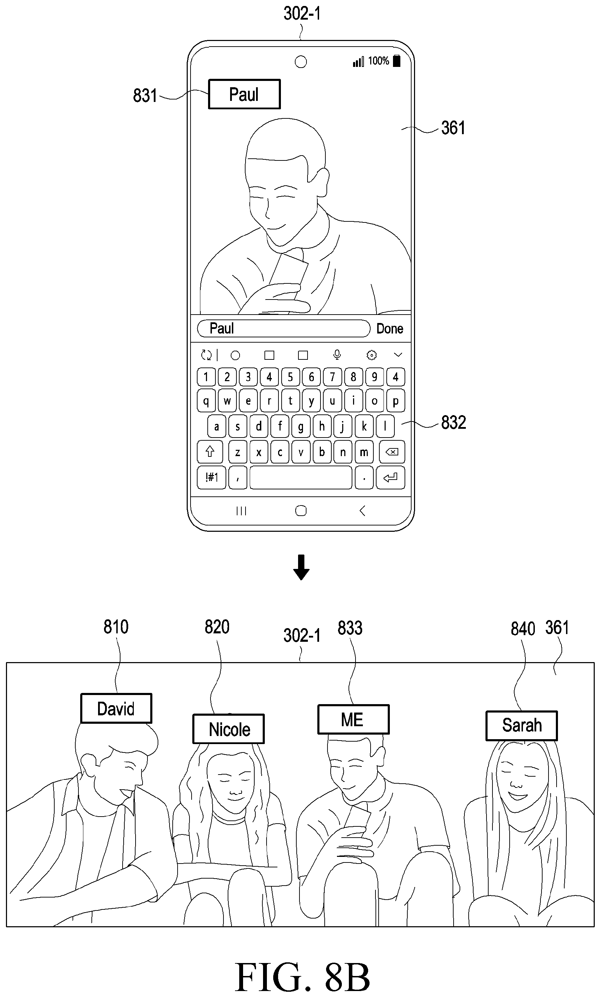

According to an embodiment, the first external electronic device 302-1 may receive identification information about the corresponding subject based on a user input 850 for selecting the object 830. The first external electronic device 302-1 may display the received identification information on the corresponding subject included in the first preview image. Thereafter, the first external electronic device 302-1 may transmit the first preview image in which the received identification information is displayed on the corresponding subject to the electronic device 301. Meanwhile, a process in which the first external electronic device 302-1 inputs the identification information is described below in detail with reference to FIG. 8B.

FIG. 8B is a view illustrating a process in which an external electronic device inputs identification information onto a subject when an image corresponding to a face of a subject included in a preview image does not match a face image received from an external electronic device according to an embodiment.

According to an embodiment, when the first external electronic device 302-1 is switched from the landscape mode to the portrait mode, the first external electronic device 302-1 may enlarge the image corresponding to the face of the subject and may display the same on the display 361 of the first external electronic device 302-1. Alternatively, the first external electronic device 302-1 may enlarge the image corresponding to the face of the subject based on a screen enlarge gesture identified from the user. The first external electronic device 302-1 may display a keypad 832 for inputting identification information. The first external electronic device 302-1 may obtain identification information based on an input to the keypad 832. Alternatively, the first external electronic device 302-1 may obtain identification information based on the user's voice. However, this is merely an example, and embodiments of the present invention may not be limited thereto.

According to an embodiment, the first external electronic device 302-1 may display the obtained identification information 831 (e.g., Paul) on the display 361. Alternatively, the first external electronic device 302-1 may display information 833 (e.g., ME) indicating itself instead of the obtained identification information.

According to an embodiment, when the first external electronic device 302-1 is switched from the portrait mode to the landscape mode, the first external electronic device 302-1 may display a first preview image in which the identification information 831 or 833 is displayed on the corresponding subject.

According to an embodiment, the first external electronic device 302-1 may transmit the first preview image displaying the identification information 831 to the electronic device 301. The electronic device 301 may transmit or share the first preview image in which the identification information 831 is displayed to/with the external electronic devices 302.

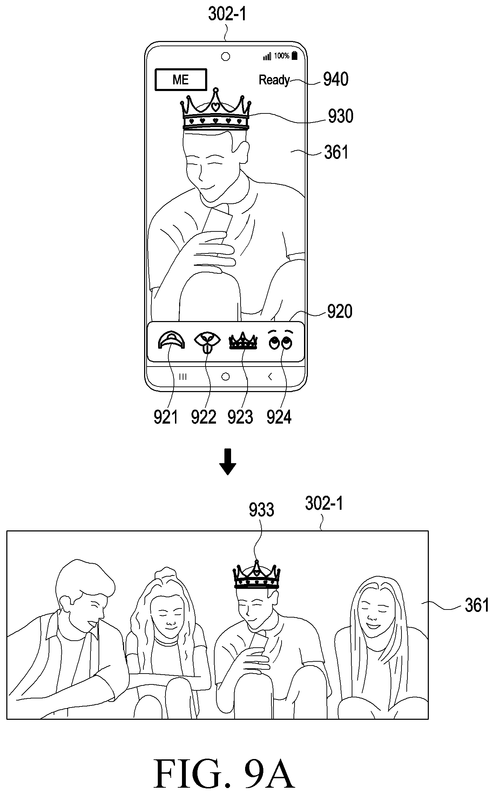

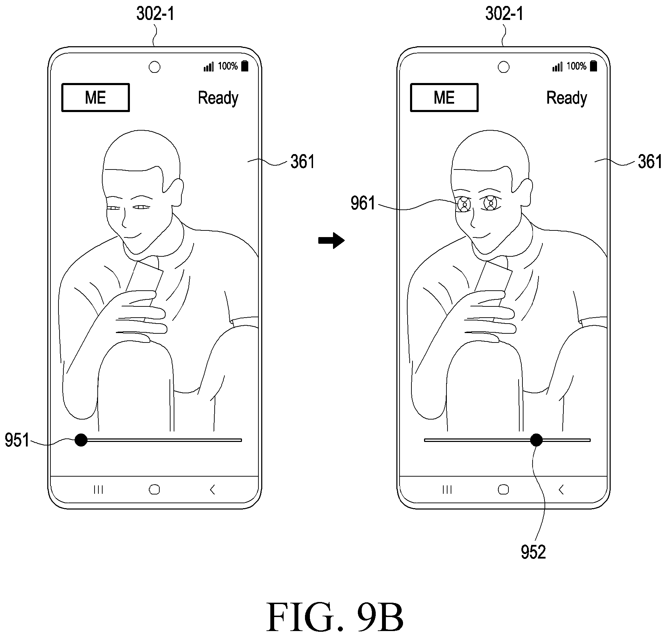

FIGS. 9A and 9B are views illustrating a process of applying an effect to a subject according to an embodiment.

Referring to FIG. 9A, according to an embodiment, the first external electronic device 302-1 may display a window (e.g., a bar-shaped window 920) for determining a specific effect to be applied to a subject on the display 361 of the first external electronic device 302-1.

According to an embodiment, the window 920 may include a plurality of objects 921, 922, 923, and 924 regarding the specific effect to be applied to the subject. According to an embodiment, the first external electronic device 302-1 may receive an input for selecting at least one object (e.g., 923) among the plurality of objects 921, 922, 923, and 924 from the user. After at least one object (e.g., 923) is selected, if an input to the object 940 (e.g., Ready) indicating that the determination is completed is identified, the first external electronic device 302-1 may transmit information about the specific effect 930 to be applied to the subject to the electronic device 301. Alternatively, according to an embodiment, in a state in which an input for selecting the plurality of objects 921, 922, 923, and 924 is not identified, if an input to the object 940 indicating that the determination is completed is identified, the first external electronic device 302-1 may transmit information indicating that no effect is applied to the subject to the electronic device 301. In this case, according to implementation, the first external electronic device 302-1 may not transmit any information to the electronic device 301.

According to an embodiment, if information indicating the specific effect 930 is received from the first external electronic device 302-1, the electronic device 301 may display a preview image reflecting the specific effect 933 on the display 360. According to an embodiment, the electronic device 301 may transmit, to the external electronic devices 302, a preview image in which a specific effect 933 is reflected on the subject corresponding to the first external electronic device 302-1.

Referring to FIG. 9B, according to an embodiment, the emoji effect may include an effect of correcting the face of the subject.

According to an embodiment, the first external electronic device 302-1 may display a bar 951 capable of correcting the face of the subject. The first external electronic device 302-1 may correct the face of the subject by moving the adjustment object 952 displayed on the bar 951. The first external electronic device 302-1 may move the adjustment object 952 according to a user input.

According to an embodiment, if the adjustment object 952 is moved to the right or left of the bar 951, the first external electronic device 302-1 may adjust the face correction effect 961 of the subject according to the movement distance of the adjustment object 952. For example, as the adjustment object 952 moves to the right of the bar 951, the face correction effect 961 applied to the subject may increase. For example, as the adjustment object 952 moves to the right of the bar 951, the size of the eye of the subject may increase. Conversely, as the adjustment object 952 moves to the left of the bar 951, the size of the eye of the subject may decrease. Alternatively, if the adjustment object 952 is moved to the right or left of the bar 951, the first external electronic device 302-1 may adjust the skin brightness of the subject according to the movement distance of the adjustment object 952.

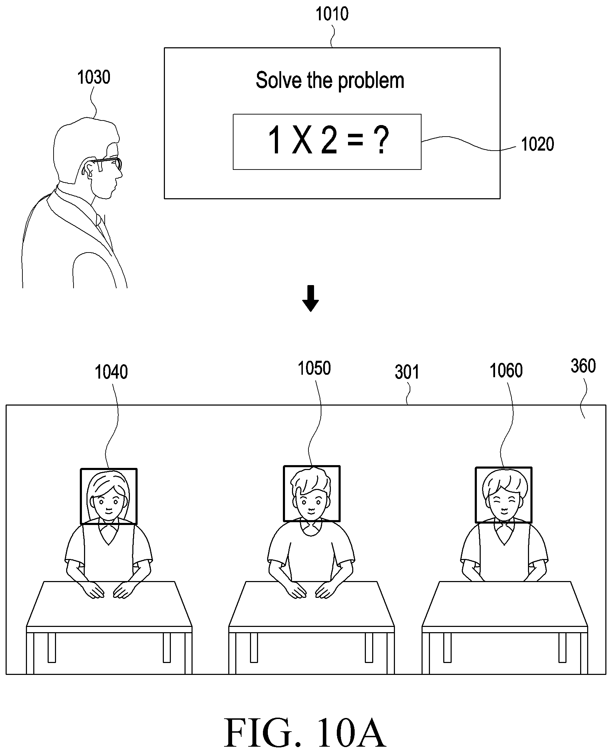

FIGS. 10A to 10C are views illustrating an example in which an electronic device is used for educational purposes according to an embodiment.

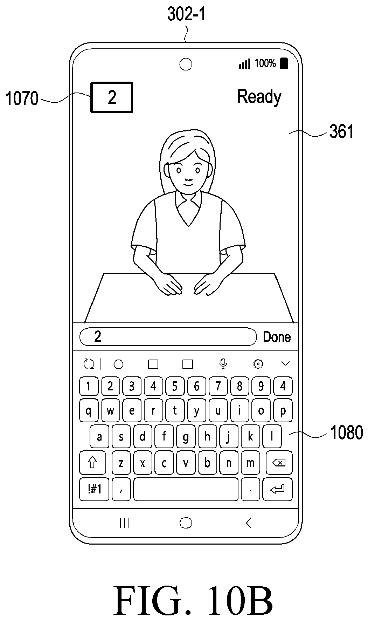

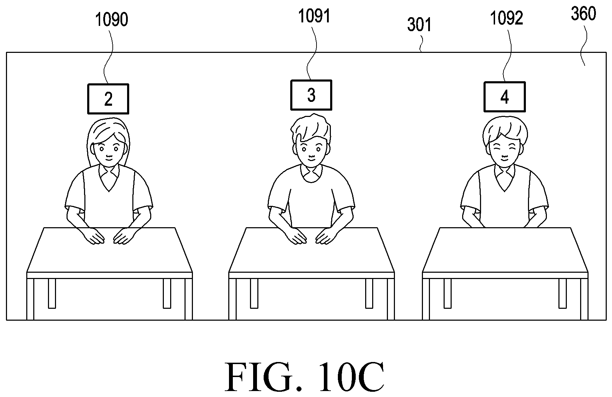

FIG. 10A is a view illustrating a teacher 1030 wearing the electronic device 301 standing in front of a blackboard 1010 on which the question 1020 is written. FIG. 10B is a view illustrating a state in which a subject 1040 inputs an answer to a question 1020 as identification information using the first external electronic device 302-1. FIG. 10C is a view illustrating identification information received by the electronic device 301 from the external electronic devices 302 on a subject included in a first preview image.

Referring to FIGS. 10A, 10B, and 10C, according to an embodiment, the electronic device 301 may establish a communication connection (e.g., a P2P communication connection or a communication connection using Wi-Fi direct) with each of external electronic devices (e.g., 302) of the subjects 1040, 1050, and 1060.

According to an embodiment, the electronic device 301 may obtain the first preview image including the subjects 1040, 1050, and 1060 using the camera 310. The electronic device 301 may transmit the first preview image to each of the external electronic devices 302 of the subjects 1040, 1050, and 1060. Further, the electronic device 301 may transmit an image of the blackboard 1010 on which the problem 1020 is written to the external electronic devices 302.

If it is identified that the user information (e.g., a face image) received from the external electronic devices 302 matches the faces of the subjects 1040, 1050, and 1060, each of the external electronic devices 302 may input identification information to be displayed on the corresponding subject 1040, 1050, or 1060.

Referring to FIG. 10B, according to an embodiment, the first external electronic device 302-1 among the external electronic devices 302 may receive identification information 1070 to be displayed on the face of the subject 1040 from the user (e.g., the subject 1040) through the keypad 1080. According to an embodiment, the electronic device 301 may receive identification information from the first external electronic device 302-1.

Referring to FIG. 10C, according to an embodiment, the electronic device 301 may display identification information 1090 received from the first external electronic device 302-1 on a corresponding subject 1040 included in the first preview image.

According to the above-described method, the electronic device 301 may receive identification information 1091 and 1092 from other external electronic devices (e.g., 302-2 and 302-3). The electronic device 301 may display the identification information 1091 and 1092 received from the other external electronic devices 302-2 and 302-3 on the subjects 1050 and 1060 corresponding to the first preview image. For example, the identification information 1090, 1091, and 1092 may include an answer to the question 1020 input to the external electronic devices 302. The electronic device 301 may display, through the display 360, answers 1090, 1091, and 1092 to the question 102 input by the external electronic devices 302 on the subjects 1040, 1050, and 1060 of the first preview image.

Through the above-described method, the teacher 1030 may ask a plurality of students the correct answer to the question 1020 using the electronic device 301. Further, the teacher 1030 may identify, using the electronic device 301, which student has given the correct answer to the question 1020 among the plurality of students. For example, the teacher 1030 may compare the identification information 1090, 1091, and 1092 displayed on the electronic device 301 with the correct answer (e.g., 2) to the question 1020, identifying which student has given the correct answer to the question 1020. According to the above-described method, the electronic device 301 may be utilized in an educational field. However, the above description is merely an example, and the technical spirit of the disclosure may not be limited thereto.

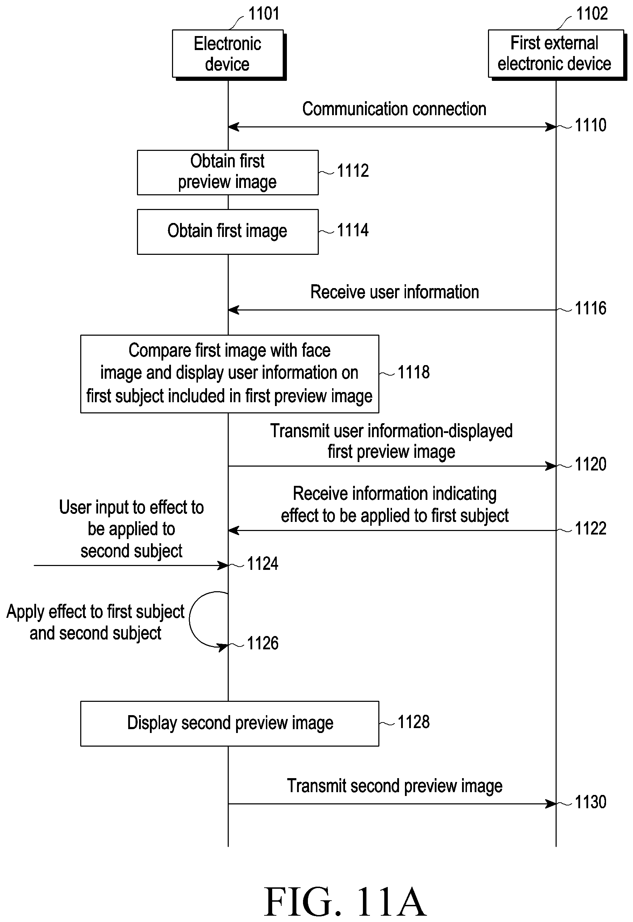

FIG. 11A is a view illustrating an operation of applying an effect to a subject included in an image captured by an electronic device according to an embodiment.

According to an embodiment, the electronic device 1101 may establish a communication connection with the first external electronic device 1102 through the P2P communication technology (e.g., Wi-Fi direct) in operation 1110. For example, the electronic device 1101 may be implemented to be identical or similar to the electronic device of FIG. 3. Further, the first external electronic device 1102 may be implemented to be identical or similar to any one (e.g., the first external electronic device 302-1) of the external electronic devices 302.

According to an embodiment, the electronic device 1101 may capture or obtain a first preview image using a camera (e.g., 310 of FIG. 3) in operation 1112. The electronic device 1101 may display a first preview image on the display (e.g., 360 of FIG. 3). For example, the first preview image may be captured using a camera disposed on the same surface as the display 360 of the electronic device 1101. In other words, the first preview image may be captured while the user of the electronic device 1101 is able to view the display 360. The first preview image may include a first subject and a second subject. The first subject may mean the user of the first external electronic device 1102, and the second subject may mean the user of the electronic device 1101.

According to an embodiment, the electronic device 1101 may obtain a first image and a second image in operation 1114. The first image may mean an image corresponding to the face of the first subject included in the first preview image. The second image may mean an image corresponding to the face of the second subject included in the first preview image.

According to an embodiment, the electronic device 1101 may receive user information including a face image from the first external electronic device 1102 in operation 1116.

According to an embodiment, in operation 1118, the electronic device 1101 may compare the first image with the face image received from the first external electronic device 1102 and may display user information or identification information on the first subject. According to an embodiment, the electronic device 1101 may compare the face image registered or stored in the electronic device 1101 with the second image, and may display user information (or identification information) registered or stored in the electronic device 301 on the second subject. Alternatively, according to an embodiment, the electronic device 1101 may display an object for directly receiving user information (or identification information) on the display 360.

According to an embodiment, in operation 1120, the electronic device 1101 may transmit a first preview image in which user information is displayed to the first external electronic device 1102.

According to an embodiment, the electronic device 1101 may receive information indicating an effect to be applied to the first subject from the first external electronic device 1102 in operation 1122.

According to an embodiment, the electronic device 1101 may identify a user input for a specific effect to be applied to the second subject in operation 1124.

According to an embodiment, the electronic device 1101 may apply a specific effect to the first subject and the second subject in operation 1126. The electronic device 1101 may obtain a second preview image in which an effect is applied to the first subject and the second subject.

According to an embodiment, in operation 1128, the electronic device 1101 may display, on the display 360, a second preview image in which a specific effect (e.g., an emoji effect) is applied to the first subject and the second subject.

According to an embodiment, the electronic device 1101 may transmit the second preview image to the first external electronic device 1102 in operation 1130.

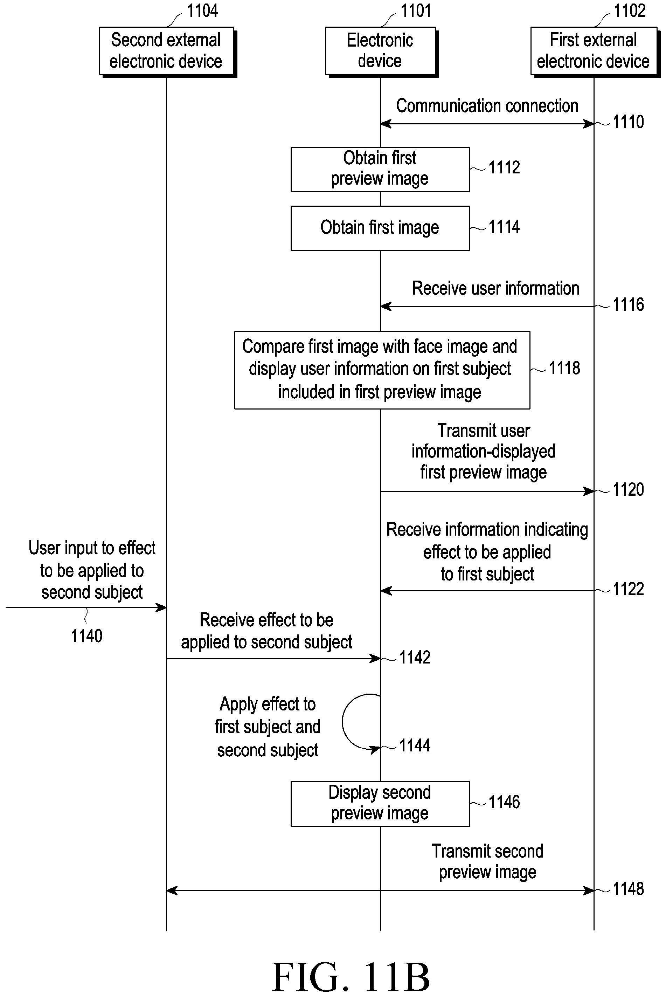

FIG. 11B is a view illustrating an operation of applying an effect to a subject included in an image captured by an electronic device according to an embodiment.

Referring to FIG. 11B, according to an embodiment, operations 1110 to 1122 described with reference to FIG. 11A may be performed in the same manner in operation 11B prior to operation 1140. However, a description of the corresponding operations will be omitted.

According to an embodiment, the electronic device 1101 may identify a user input to a specific effect to be applied to the second subject by the second external electronic device 1104 in operation 1140.

According to an embodiment, the electronic device 1101 may receive the specific effect to be applied to the second subject from the second external electronic device 1104 in operation 1142.

According to an embodiment, in operation 1144, the electronic device 1101 may apply the specific effect to the first subject and the second subject.

According to an embodiment, in operation 1146, the electronic device 1101 may display, on the display, a second preview image in which the specific effect is applied to the first subject and the second subject.

According to an embodiment, the electronic device 1101 may transmit the second preview image to the first external electronic device 1102 and the second external electronic device 1104 in operation 1148.

The electronic devices 1201, 1202, and 1204, which are described below, may be implemented to be identical or similar to the electronic device 301 of FIG. 3. Further, the electronic devices 1201, 1202, and 1204 may be implemented to be identical or similar to the first external electronic devices 302 and the second external electronic device 304.

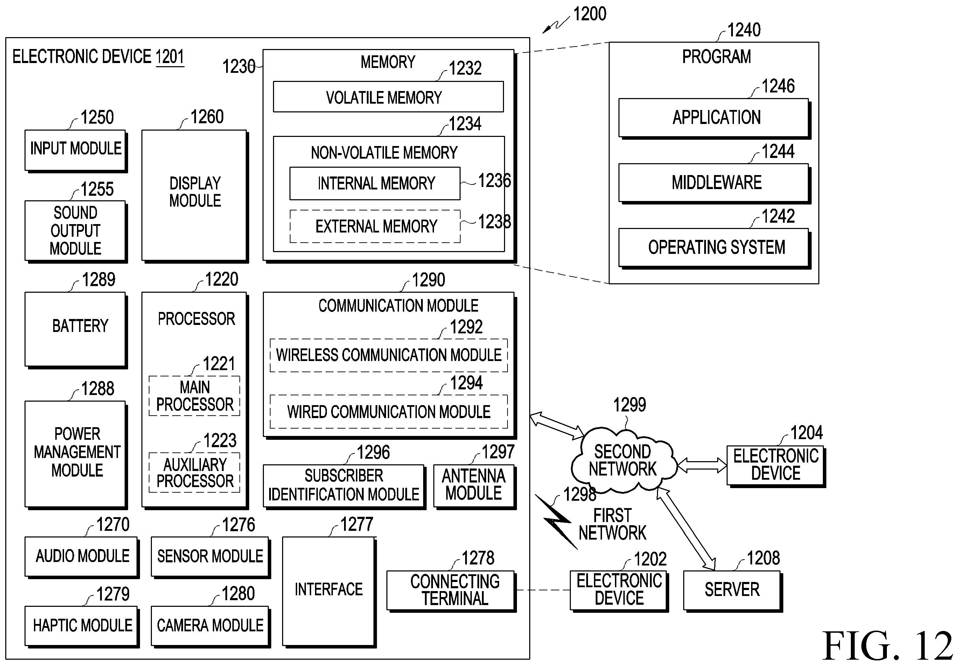

FIG. 12 is a block diagram illustrating an electronic device 1201 in a network environment 1200 according to an embodiment. Referring to FIG. 12, the electronic device 1201 in the network environment 1200 may communicate with at least one of an electronic device 1202 via a first network 1298 (e.g., a short-range wireless communication network), or an electronic device 1204 or a server 1208 via a second network 1299 (e.g., a long-range wireless communication network). According to an embodiment, the electronic device 1201 may communicate with the electronic device 1204 via the server 1208. According to an embodiment, the electronic device 1201 may include a processor 1220, memory 1230, an input module 1250, a sound output module 1255, a display module 1260, an audio module 1270, a sensor module 1276, an interface 1277, a connecting terminal 1278, a haptic module 1279, a camera module 1280, a power management module 1288, a battery 1289, a communication module 1290, a subscriber identification module (SIM) 1296, or an antenna module 1297. In an embodiment, at least one (e.g., the connecting terminal 1278) of the components may be omitted from the electronic device 1201, or one or more other components may be added in the electronic device 101. According to an embodiment, some (e.g., the sensor module 1276, the camera module 1280, or the antenna module 1297) of the components may be integrated into a single component (e.g., the display module 1260).

The processor 1220 may execute, for example, software (e.g., a program 1240) to control at least one other component (e.g., a hardware or software component) of the electronic device 1201 coupled with the processor 1220, and may perform various data processing or computation. According to one embodiment, as at least part of the data processing or computation, the processor 1220 may store a command or data received from another component (e.g., the sensor module 1276 or the communication module 1290) in volatile memory 1232, process the command or the data stored in the volatile memory 1232, and store resulting data in non-volatile memory 1234. According to an embodiment, the processor 1220 may include a main processor 1221 (e.g., a central processing unit (CPU) or an application processor (AP)), or an auxiliary processor 1223 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 1201 includes the main processor 1221 and the auxiliary processor 1223, the auxiliary processor 1223 may be configured to use lower power than the main processor 1221 or to be specified for a designated function. The auxiliary processor 1223 may be implemented as separate from, or as part of the main processor 1221.

The auxiliary processor 1223 may control at least some of functions or states related to at least one component (e.g., the display module 1260, the sensor module 1276, or the communication module 1290) among the components of the electronic device 1201, instead of the main processor 1221 while the main processor 1221 is in an inactive (e.g., sleep) state, or together with the main processor 1221 while the main processor 1221 is in an active state (e.g., executing an application). According to an embodiment, the auxiliary processor 1223 (e.g., an image signal processor or a communication processor) may be implemented as part of another component (e.g., the camera module 1280 or the communication module 1290) functionally related to the auxiliary processor 123. According to an embodiment, the auxiliary processor 1223 (e.g., the neural processing unit) may include a hardware structure specified for artificial intelligence model processing. The artificial intelligence model may be generated via machine learning. Such learning may be performed, e.g., by the electronic device 1201 where the artificial intelligence is performed or via a separate server (e.g., the server 1208). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1230 may store various data used by at least one component (e.g., the processor 1220 or the sensor module 1276) of the electronic device 1201. The various data may include, for example, software (e.g., the program 1240) and input data or output data for a command related thereto. The memory 1230 may include the volatile memory 1232 or the non-volatile memory 1234.

The program 1240 may be stored in the memory 1230 as software, and may include, for example, an operating system (OS) 1242, middleware 1244, or an application 1246.

The input module 1250 may receive a command or data to be used by other component (e.g., the processor 1220) of the electronic device 1201, from the outside (e.g., a user) of the electronic device 1201. The input module 1250 may include, for example, a microphone, a mouse, a keyboard, keys (e.g., buttons), or a digital pen (e.g., a stylus pen).

The sound output module 1255 may output sound signals to the outside of the electronic device 1201. The sound output module 1255 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1260 may visually provide information to the outside (e.g., a user) of the electronic device 1201. The display 1260 may include, for example, a display, a hologram device, or a projector and control circuitry to control a corresponding one of the display, hologram device, and projector. According to an embodiment, the display 1260 may include a touch sensor configured to detect a touch, or a pressure sensor configured to measure the intensity of a force generated by the touch.

The audio module 1270 may convert a sound into an electrical signal and vice versa. According to an embodiment, the audio module 1270 may obtain the sound via the input module 1250, or output the sound via the sound output module 1255 or a headphone of an external electronic device (e.g., an electronic device 1202) directly (e.g., wiredly) or wirelessly coupled with the electronic device 1201.

The sensor module 1276 may detect an operational state (e.g., power or temperature) of the electronic device 1201 or an environmental state (e.g., a state of a user) external to the electronic device 101, and then generate an electrical signal or data value corresponding to the detected state. According to an embodiment, the sensor module 1276 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 1277 may support one or more specified protocols to be used for the electronic device 1201 to be coupled with the external electronic device (e.g., the electronic device 1202) directly (e.g., wiredly) or wirelessly. According to an embodiment, the interface 1277 may include, for example, a high definition multimedia interface (HDMI), a universal serial bus (USB) interface, a secure digital (SD) card interface, or an audio interface.

A connecting terminal 1278 may include a connector via which the electronic device 1201 may be physically connected with the external electronic device (e.g., the electronic device 1202). According to an embodiment, the connecting terminal 1278 may include, for example, a HDMI connector, a USB connector, a SD card connector, or an audio connector (e.g., a headphone connector).

The haptic module 1279 may convert an electrical signal into a mechanical stimulus (e.g., a vibration or motion) or electrical stimulus which may be recognized by a user via his tactile sensation or kinesthetic sensation. According to an embodiment, the haptic module 1279 may include, for example, a motor, a piezoelectric element, or an electric stimulator.

The camera module 1280 may capture a still image or moving images. According to an embodiment, the camera module 1280 may include one or more lenses, image sensors, image signal processors, or flashes.

The power management module 1288 may manage power supplied to the electronic device 1201. According to an embodiment, the power management module 1288 may be implemented as at least part of, for example, a power management integrated circuit (PMIC).

The battery 1289 may supply power to at least one component of the electronic device 1201. According to an embodiment, the battery 1289 may include, for example, a primary cell which is not rechargeable, a secondary cell which is rechargeable, or a fuel cell.

The communication module 1290 may support establishing a direct (e.g., wired) communication channel or a wireless communication channel between the electronic device 1201 and the external electronic device (e.g., the electronic device 1202, the electronic device 1204, or the server 1208) and performing communication via the established communication channel. The communication module 1290 may include one or more communication processors that are operable independently from the processor 1220 (e.g., the application processor (AP)) and supports a direct (e.g., wired) communication or a wireless communication. According to an embodiment, the communication module 1290 may include a wireless communication module 1292 (e.g., a cellular communication module, a short-range wireless communication module, or a global navigation satellite system (GNSS) communication module) or a wired communication module 1294 (e.g., a local area network (LAN) communication module or a power line communication (PLC) module). A corresponding one of these communication modules may communicate with the external electronic device 1204 via a first network 1298 (e.g., a short-range communication network, such as Bluetooth^{™}, wireless-fidelity (Wi-Fi) direct, or infrared data association (IrDA)) or a second network 1299 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 1292 may identify or authenticate the electronic device 1201 in a communication network, such as the first network 1298 or the second network 1299, using subscriber information (e.g., international mobile subscriber identity (IMSI)) stored in the subscriber identification module 1296.

The wireless communication module 1292 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1292 may support a high-frequency band (e.g., the mmWave band) to achieve, e.g., a high data transmission rate. The wireless communication module 1292 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1292 may support various requirements specified in the electronic device 1201, an external electronic device (e.g., the electronic device 1204), or a network system (e.g., the second network 1299). According to an embodiment, the wireless communication module 1292 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1297 may transmit or receive a signal or power to or from the outside (e.g., the external electronic device). According to an embodiment, the antenna module 1297 may include an antenna including a radiator formed of a conductor or conductive pattern formed on a substrate (e.g., a printed circuit board (PCB)). According to an embodiment, the antenna module 1297 may include a plurality of antennas (e.g., an antenna array). In this case, at least one antenna appropriate for a communication scheme used in a communication network, such as the first network 1298 or the second network 1299, may be selected from the plurality of antennas by, e.g., the communication module 1290. The signal or the power may then be transmitted or received between the communication module 1290 and the external electronic device via the selected at least one antenna. According to an embodiment, other parts (e.g., radio frequency integrated circuit (RFIC)) than the radiator may be further formed as part of the antenna module 1297.

According to an embodiment, the antenna module 1297 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 1201 and the external electronic device 1204 via the server 1208 coupled with the second network 1299. The external electronic devices 1202 or 1204 each may be a device of the same or a different type from the electronic device 1201. According to an embodiment, all or some of operations to be executed at the electronic device 1201 may be executed at one or more of the external electronic devices 1202, 1204, or 1208. For example, if the electronic device 1201 should perform a function or a service automatically, or in response to a request from a user or another device, the electronic device 1201, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1201. The electronic device 1201 may provide the outcome, with or without further processing of the outcome, as at least part of a reply to the request. To that end, a cloud computing, distributed computing, mobile edge computing (MEC), or client-server computing technology may be used, for example. The electronic device 1201 may provide ultra low-latency services using, e.g., distributed computing or mobile edge computing. In another embodiment, the external electronic device 104 may include an Internet-of-things (IoT) device. The server 1208 may be an intelligent server using machine learning and/or a neural network. According to an embodiment, the external electronic device 1204 or the server 1208 may be included in the second network 1299. The electronic device 1201 may be applied to intelligent services (e.g., smart home, smart city, smart car, or healthcare) based on 5G communication technology or IoT-related technology.

An electronic device according to an embodiment may comprise communication circuitry, memory, a camera, a display, and at least one processor.

The memory according to an embodiment may store at least one instruction that, when executed by the at least one processor, causes the electronic device to establish a communication connection with a first external electronic device through the communication circuitry.

The memory according to an embodiment may store at least one instruction that, when executed by the at least one processor, causes the electronic device to obtain a first preview image using the camera.

The memory according to an embodiment may store at least one instruction that, when executed by the at least one processor, causes the electronic device to obtain a first image corresponding to a face of a first subject included in the first preview image.

The memory according to an embodiment may store at least one instruction that, when executed by the at least one processor, causes the electronic device to obtain user information including a face image registered or stored in the first external electronic device from the first external electronic device through the communication connection.

The memory according to an embodiment may store at least one instruction that, when executed by the at least one processor, causes the electronic device to compare the first image with the face image and display the user information of the first external electronic device on the first subject included in the first preview image.

The memory according to an embodiment may store at least one instruction that, when executed by the at least one processor, causes the electronic device to receive information indicating an effect for the first subject determined by the first external electronic device from the first external electronic device through the communication connection.

The memory according to an embodiment may store at least one instruction that, when executed by the at least one processor, causes the electronic device to display a second preview image in which the effect is applied to the first subject on the display.

The memory according to an embodiment may store at least one instruction that causes to, when the first image and the face image match each other, display identification information about the first external electronic device included in the user information on the subject.

The memory according to an embodiment may store at least one instruction that causes to, when the first image and the face image do not match each other, display information indicating that the first image and the face image do not match each other on the first subject.

The memory according to an embodiment may store at least one instruction that causes to transmit an image in which the user information of the first external electronic device is displayed on the first subject to the first external electronic device through the communication connection.

The memory according to an embodiment may store at least one instruction that causes to transmit the second preview image to the first external electronic device through the communication connection.

The memory according to an embodiment may store at least one instruction that causes to execute an application related to the camera.

The memory according to an embodiment may store at least one instruction that causes to transmit the first preview image to the first external electronic device based on identifying that the same application as the application is executed on the first external electronic device.

The first preview image according to an embodiment may include an image captured in real-time using the camera or a still image pre-captured using the camera.

The memory according to an embodiment may store at least one instruction that causes to determine an effect for a second subject included in the first preview image based on a user input to the electronic device.

The memory according to an embodiment may store at least one instruction that causes to display a third preview image in which the effect is applied to the second subject on the display.

The memory according to an embodiment may store at least one instruction that causes to determine an effect for a second subject included in the first preview image based on a user input to a second external electronic device.

The memory according to an embodiment may store at least one instruction that causes to display a third preview image in which the effect is applied to the second subject on the display.

The electronic device according to an embodiment may include augmented reality glasses.

A method for operating an electronic device according to an embodiment may comprise forming a communication connection with a first external electronic device through communication circuitry included in the electronic device.

The method for operating an electronic device according to an embodiment may comprise obtaining a first preview image using a camera included in the electronic device.

The method for operating the electronic device according to an embodiment may comprise obtaining a first image corresponding to a face of a first subject included in the first preview image.

The method for operating the electronic device according to an embodiment may comprise obtaining user information including a face image registered or stored in the first external electronic device from the first external electronic device through the communication connection.

The method for operating the electronic device according to an embodiment may comprise comparing the first image with the face image and displaying the user information of the first external electronic device on the first subject included in the first preview image.

The method for operating the electronic device according to an embodiment may comprise receiving information indicating an effect for the first subject determined by the first external electronic device from the first external electronic device through the communication connection.

The method for operating the electronic device according to an embodiment may comprise displaying a second preview image in which the effect is applied to the first subject on a display included in the electronic device.

The method for operating the electronic device according to an embodiment may comprise, when the first image and the face image match each other, displaying identification information about the first external electronic device included in the user information on the first subject.

The method for operating the electronic device according to an embodiment may comprise, when the first image and the face image do not match each other, displaying information indicating that the first image and the face image do not match each other on the first subject.

The method for operating the electronic device according to an embodiment may comprise transmitting an image in which the user information of the first external electronic device is displayed on the first subject to the first external electronic device through the communication connection.

The method for operating the electronic device according to an embodiment may comprise transmitting the second preview image to the first external electronic device through the communication connection.

The method for operating the electronic device according to an embodiment may comprise executing an application related to the camera.

The method for operating the electronic device according to an embodiment may comprise transmitting the first preview image to the first external electronic device based on identifying that the same application as the application is executed on the first external electronic device.

The first preview image according to an embodiment may include an image captured in real-time using the camera or a still image pre-captured using the camera.

The method for operating the electronic device according to an embodiment may comprise determining an effect for a second subject included in the first preview image based on a user input to the electronic device.

The method for operating the electronic device according to an embodiment may comprise determining an effect for a second subject included in the first preview image based on a user input to a second external electronic device.

The method for operating the electronic device according to an embodiment may comprise displaying a third preview image in which the effect is applied to the second subject on the display.

A non-transitory recording medium of an electronic device according to an embodiment may execute forming a communication connection with a first external electronic device through communication circuitry included in an electronic device.

The non-transitory recording medium of the electronic device according to an embodiment may execute obtaining a first preview image using a camera included in the electronic device.

The non-transitory recording medium of the electronic device according to an embodiment may execute obtaining a first image corresponding to a face of a first subject included in the first preview image.

The non-transitory recording medium of the electronic device according to an embodiment may execute obtaining user information including a face image registered or stored in the first external electronic device from the first external electronic device through the communication connection.

The non-transitory recording medium of the electronic device according to an embodiment may execute comparing the first image with the face image and displaying the user information of the first external electronic device on the first subject included in the first preview image.

The non-transitory recording medium of the electronic device according to an embodiment may execute receiving information indicating an effect for the first subject determined by the first external electronic device from the first external electronic device through the communication connection.

The non-transitory recording medium of the electronic device according to an embodiment may execute displaying a second preview image in which the effect is applied to the first subject on a display included in the electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic device is not limited to the above-listed embodiments.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1240) including one or more instructions that are stored in a storage medium (e.g., internal memory 1236 or external memory 1238) that is readable by a machine (e.g., the electronic device 100, 301, 1101, or 1201). For example, a processor (e.g., the processor 1220) of the machine (e.g., the electronic device 100, 301, 1101, or 1201) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (100, 301, 1201), comprising:
communication circuitry (170, 350, 1290);
memory (140, 330, 1230);
a camera (111, 112, 113, 310, 1280);
a display (150, 360, 1260); and
at least one processor (120, 320, 1220), wherein the memory stores at least one instruction that, when executed by the at least one processor (120, 320, 1220), causes the electronic device to:
establish, through the communication circuitry, a communication connection with a first external electronic device (302, 1102, 1202, 1204);
obtain, using the camera, a first preview image;
obtain a first image corresponding to a face of a first subject included in the first preview image;
obtain, through the communication connection, user information including a face image registered or stored in the first external electronic device from the first external electronic device;
compare the first image with the face image and display the user information of the first external electronic device on the first subject included in the first preview image;
receive, through the communication connection, information indicating an effect for the first subject determined by the first external electronic device from the first external electronic device; and
display, on the display, a second preview image in which the effect is applied to the first subject.

2. The electronic device of claim 1, wherein the at least one instruction, as at least part of comparing the first image with the face image and displaying the user information of the first external electronic device on the first subject included in the first preview image, when the first image and the face image match each other, causes the electronic device to display identification information about the first external electronic device included in the user information on the subject.

3. The electronic device of claim 1 or 2, wherein the at least one instruction, when executed by the at least one processor, causes the electronic device to, when the first image and the face image do not match each other, display information indicating that the first image and the face image do not match each other on the first subject.

4. The electronic device of any one of claims 1 to 3, wherein the at least one instruction, when executed by the at least one processor, causes the electronic device to transmit, through the communication connection, an image in which the user information of the first external electronic device is displayed on the first subject to the first external electronic device.

5. The electronic device of any one of claims 1 to 4, wherein the at least one instruction, when executed by the at least one processor, causes the electronic device to transmit, through the communication connection, the second preview image to the first external electronic device.

6. The electronic device of any one of claims 1 to 5, wherein the at least one instruction, when executed by the at least one processor, causes the electronic device to:
execute an application related to the camera; and
based on identifying that the same application as the application related to the camera is executed on the first external electronic device, transmit the first preview image to the first external electronic device.

7. The electronic device of any one of claims 1 to 6, wherein the first preview image includes an image captured in real-time using the camera or a still image pre-captured using the camera.

8. The electronic device of any one of claims 1 to 7, wherein the at least one instruction that, when executed by the at least one processor, causes the electronic device to:
determine an effect for a second subject included in the first preview image based on a user input to the electronic device; and
display a third preview image in which the effect is applied to the second subject on the display.

9. The electronic device of any one of claims 1 to 8, wherein the at least one instruction, when executed by the at least one processor, cause the electronic device to:
determine an effect for a second subject included in the first preview image based on a user input to a second external electronic device (304, 1104, 1202, 1204); and
display a third preview image in which the effect is applied to the second subject on the display.

10. The electronic device of any one of claims 1 to 9, wherein the electronic device includes augmented reality (AR) glasses.

11. A method for operating an electronic device (100, 301, 1201), the method comprising:
establishing, through communication circuitry (170, 350, 1290) included in the electronic device, a communication connection with a first external electronic device (302, 1102, 1202, 1204);
obtaining, using a camera (111, 112, 113, 310, 1280) included in the electronic device, a first preview image;
obtaining a first image corresponding to a face of a first subject included in the first preview image;
obtaining, through the communication connection, user information including a face image registered or stored in the first external electronic device from the first external electronic device;
comparing the first image with the face image and displaying the user information of the first external electronic device on the first subject included in the first preview image;
receiving, through the communication connection, information indicating an effect for the first subject determined by the first external electronic device from the first external electronic device; and
displaying, on a display included in the electronic device, a second preview image in which the effect is applied to the first subject.

12. The method of claim 11, further comprising, as at least part of comparing the first image with the face image and displaying the user information of the first external electronic device on the first subject included in the first preview image, when the first image and the face image match each other, displaying identification information about the first external electronic device included in the user information on the first subject.

13. The method of claim 11 or 12, further comprising, when the first image and the face image do not match each other, displaying information indicating that the first image and the face image do not match each other on the first subject.

14. The method of any one of claims 11 to 13, further comprising transmitting an image in which the user information of the first external electronic device is displayed on the first subject to the first external electronic device through the communication connection.

15. A non-transitory recording medium storing instructions configured to execute:
establishing, through communication circuitry included in an electronic device (100, 301, 1201), a communication connection with a first external electronic device (302, 1102, 1202, 1204);
obtaining, using a camera (111, 112, 113, 310, 1280) included in the electronic device, a first preview image;
obtaining a first image corresponding to a face of a first subject included in the first preview image;
obtaining, through the communication connection, user information including a face image registered or stored in the first external electronic device from the first external electronic device;
comparing the first image with the face image and displaying the user information of the first external electronic device on the first subject included in the first preview image;
receiving, through the communication connection, information indicating an effect for the first subject determined by the first external electronic device from the first external electronic device; and
displaying, on a display included in the electronic device, a second preview image in which the effect is applied to the first subject.
